# EUROPÄISCHE PATENTSCHRIFT

(11) **EP 2 115 938 B1**
(45) Veröffentlichungstag und Bekanntmachung des Hinweises auf die Patenterteilung: **13.07.2016**
(21) Anmeldenummer: 08708572.6
(22) Anmeldetag: 01.02.2008
(51) Int. Cl.: H04W 8/26, H04W 60/00, H04W 80/10, H04L 29/06, H04L 12/24, H04W 8/20

(54) **VERFAHREN, KOMMUNIKATIONSGERÄT UND KONFIGURATIONSSERVER ZUM AUFBAUEN UND BETREIBEN EINES KOMMUNIKATIONSSYSTEMS**
METHOD, COMMUNICATION DEVICE AND CONFIGURATION SERVER FOR ESTABLISHING AND OPERATING A COMMUNICATION SYSTEM
PROCÉDÉ, APPAREIL DE COMMUNICATION ET SERVEUR DE CONFIGURATION POUR ÉTABLIR ET EXPLOITER UN SYSTÈME DE COMMUNICATION

(30) Priorität: 01.02.2007 EP 07002212
(43) Veröffentlichungstag der Anmeldung: 11.11.2009
(73) Patentinhaber: Gigaset Communications GmbH, 40549 Düsseldorf (DE)
(72) Erfinder: MÜLLER, Andreas, 46459 Rees (DE); KRUK, Anton, 46499 Hamminkeln (DE)
(74) Vertreter: Michalski Hüttermann & Partner Patentanwälte mbB
(86) Internationale Anmeldenummer: PCT/EP2008/051265
(87) Internationale Veröffentlichungsnummer: WO 2008/092951

(56) Entgegenhaltungen:
- EP-A- 1 536 661
- US-A1- 2002 061 748
- PETRIE PINGTEL CORP DRAFT-PETRIE-SIP-CONFIG-FRAMEWORK-01 TXT D: "A Framework for SIP User Agent Configuration ; draft-petrie-sip-config-framework-01.txt" IETF STANDARD-WORKING-DRAFT, INTERNET ENGINEERING TASK FORCE, IETF, CH, no. 1, 1 novembre 2001 (2001-11-01), XP015004838 ISSN: 0000-0004

## Beschreibung

Die Erfindung bezieht sich auf ein Verfahren zum Aufbauen und Betreiben eines Kommunikationssystems gemäß dem Oberbegriff des Patentanspruches 1, ein Kommunikationsgerät zum Aufbauen und Betreiben eines Kommunikationssystems gemäß den Oberbegriffen der Patentansprüche 14 und 16 sowie einen Konfigurationsserver zum Aufbauen und Betreiben eines Kommunikationssystems gemäß dem Oberbegriff des Patentanspruches 15.

Ein Kommunikationssystem im Sinne der Erfindung ermöglicht eine peer-to-(multi-)peer-Kommunikation zwischen zwei bzw mehreren Kommunikationsteilnehmern eines Kommunikationsnetzes, bei dem Kommunikationsgeräte der Teilnehmer mit einer Steuerungseinheit (Server) im Kommunikationsnetz verbunden sind. In Abhängigkeit von dem Kommunikationsnetz, paketvermitteltes Netz oder leitungsvermitteltes Netz, handelt es sich bei den Kommunikationsgeräten beispielsweise um "**V**oice **o**ver **I**nternet **P**rotocol (VoIP)"-Telefone oder "**P**ublic **S**witched **T**elephone Network (PSTN)"-/"**I**ntegrated **S**ervice **D**igital **N**etwork (ISDN)"-Telefone. Neben den genannten Telefonen können aber auch andere Gerätetypen für das Kommunikationssystem benutzt werden.

Im Gegensatz zu den "PSTN/ISDN"-Telefonen, die man direkt nach Einstecken in eine Netzanschlusseinrichtung, z.B. die TAE-Dose, sofort in Betrieb nehmen kann, sind bei VoIP-Telefonen zusätzliche Vorbereitungen durch den Kunden erforderlich, bevor er das erste VoIP-Telefonat führen kann.

Bei bisherigen VoIP-Telefonen kann der Benutzer (user) das Gerät nicht sofort in Betrieb nehmen, sondern muss sich zuerst bei einem Internet-Dienstanbieter, z.B. einem "**S**ession **I**nitiation **P**rotocol SIP)"-Provider registrieren. Dies geschieht üblicherweise am Personal Computer unter Zuhilfenahme eines Internet-Browsers. Nach Angabe seiner persönlichen Daten werden dem Benutzer dann vom SIP-Provider ein Anmeldename und ein Anmeldepasswort zugeteilt. Diese Daten muss der Benutzer dann in sein VoIP-Gerät übertragen. Eventuell sind sogar noch weitere Parameter [SIP-Port, Proxy, STUN *(Session Traversal Utilities for NAT (Network Address Translation)*)*,* etc.] abhängig vom ausgewählten SIP-Provider einzustellen. Erst danach kann er VoIP-Telefonate führen. Dieses Verfahren ist insbesondere für unerfahrene Benutzer sehr schwierig und aufwändig.

EP 1 536 661 A2 offenbart, dass zum Registrieren eines Kommunikationsgerätes an einem Kommunikationsnetzwerk zwischen dem Kommunikationsgerät und mindestens einer Registrierungseinheit des Kommunikationsnetzwerkes ein oder mehrere temporäre Kommunikationsadressen ausgehandelt werden, die lediglich für eine vorgebbare Nutzungszeitdauer gültig sind. Die jeweilige temporäre Kommunikationsadresse wird von der Registrierungseinheit für diese Nutzungszeitdauer registriert.

US 2002/0061748 A1 offenbart ein Verfahren zur Registrierung und Authentisierung eines drahtlosen Endgerätes an einer drahtlosen Basisstation innerhalb eines Hauses unter Verwendung eines drahtlosen local area networks (LAN), beispielsweise auf Basis eine IEEE 802.11 Systems.

Das im Internet zugänglichen Dokument "draf-petrie-sip-config-framework-01.txt" offenbart eine Reihe von Protokollen zur Konfiguration eines SIP-Nutzer-Endsystems. Hierbei muss das SIP-Nurzer-Endsystem ermitteln, wie und von wo es anfängliche Konfigurationsinformationen erhält und wie es über Änderungen und Aktualisierungen betreffend die Konfiguration informiert wird.

Die der Erfindung zugrunde liegende Aufgabe besteht darin, ein Verfahren, Kommunikationsgerät und Konfigurationsserver zum Aufbauen und Betreiben eines Kommunikationssystems anzugeben, bei dem mittels eines Kommunikationsgerätes, wenn dieses für den Einsatz in einem Kommunikationsnetz in Betrieb genommen wird, über einen Konfigurationsserver im Kommunikationsnetz unmittelbar, im Sinne von "Plug and Play", mit anderen im Kommunikationsserver verwalteten Kommunikationsteilnehmern einer geschlossenen Kommunikationsgemeinschaft kommuniziert werden kann.

Diese Aufgabe wird ausgehend von dem im Oberbegriff des Patentanspruches 1 definierten Verfahren durch die im Kennzeichen des Patentanspruches 1 angegebenen Merkmale gelöst.

Außerdem wird diese Aufgabe ausgehend von dem in dem Oberbegriff des Patentanspruches 8 definierten Kommunikationsgerät durch die im Kennzeichen des Patentanspruches 8 angegebenen Merkmale gelöst.

Die der Erfindung zugrunde liegende Idee besteht darin, dass ein Kommunikationssystem, aufweisend ein Kommunikationsgerät und einen proprietären Konfigurationsserver, z.B. mit einer SIP-Serverkomponente und vorzugsweise vom Hersteller des Kommunikationsgerätes, mit einem Verweis auf den Konfigurationsserver als SIP-Provider vorkonfiguriert wird. Hierbei wird eine vorzugsweise fest programmierbare und durch Benutzer weder veränderbare noch löschbare Konfigurationsinitialisierungsinformation, die z.B. als Parameter für den Zugriff auf den SIP-Server zumindest dessen IP-Adresse und Portnummer enthält, in dem Kommunikationsgerät, z.B. in einem EEPROM, hinterlegt. Gemäß dieser Initialisierungsinformation meldet sich das Gerät direkt nach dessen Einschalten automatisch beim Server mit einer eine Adressinformation enthaltene Steuerungsnachricht, z.B. gemäß den Ansprüchen 2 und 17 einer SIP-Nachricht, an. Die Adressinformation ist z.B. gemäß den Ansprüchen 3 und 18 eine dynamisch vergebene IP-Adresse. Ein Anmeldename wird dabei zumindest aus einer eineindeutigen gerätespezifischen Kennung gebildet.

Das Grundprinzip der Erfindung ist:
- Der Hersteller von Kommunikationsgeräten bietet einen eigenen SIP-Server an.
- Die Kommunikationsgeräte melden sich sofort nach der Inbetriebnahme automatisch beim Server an.
- Den erforderlichen Anmeldedatensatz erzeugt sich das Kommunikationsgerät selbst.
- Der Benutzer des Gerätes braucht keinerlei Daten für die Anmeldung eingeben.
- Sofort nach der automatischen Anmeldung können kostenlose Gespräche zu anderen registrierten Teilnehmern der "Community" geführt werden, wobei der Anruf durch direkte Eingabe einer Rufnummer oder eines "Nicknamens", eine Wahl aus einem lokalem Telefonbuch, durch die Suche in einem globalen oder proprietären Online-Telefonbuch nach "Nickname" und/oder Rufnummer erfolgt und die Rufnummer bzw. der "Nickname" vom Konfigurationsserver in eine aktuelle IP-Adresse aufgelöst wird.

→ Echtes "Zero Configuration" bis zum ersten VoIP-Call.

Die Grundlage für die Erfindung ist eine Erweiterung des bereits in der Europäischen Patentanmeldung mit der Anmeldungsnummer 06004745.3 bzw. der korrespondierenden PCT-Patentanmeldung mit der Veröffentlichungsnummer WO 2007/- 101877 A1 beschriebenen Konfigurationsservers für ein Kommunikationsgerät, z.B. ein Schnurlostelefon um eine SIP-Serverkomponente. Gemäß den vorstehend genannten Patentanmeldungen wird der Konfigurationsserver zur Vereinfachung der providerabhängigen Parametereinstellung sowie für Firmwareupgrades genutzt.

Mit Hilfe dieser Erfindung kann der Benutzer eines Kommunikationsgerätes unmittelbar nach dem Einschalten kostenlose VoIP-Telefonate mit einer Vielzahl von weiteren Kommunikationsteilnehmern führen, die innerhalb einer geschlossenen Kommunikationsgemeinschaft ("Community"), der z.B. wie der Benutzer des Gerätes alle Besitzer eines VoIP-Schnurlostelefon vom Typ "GIGASET™" angehören, führen. Darüber hinaus ist auch der Versand kostenloser Kurznachrichten [z.B. SMS (**S**hort **M**essage **S**ervice), MMS (**M**ultimedia **M**essage **S**ervice) etc.] zwischen den beteiligten Geräten sofort möglich.

Vorteile für den Benutzer:
- "Auspacken und sofort kostenlos telefonieren".
- Keine Konfiguration durch Kunden erforderlich, also echtes "Zero Configuration".
- Aufwändige Web-Registrierung bei einem SIP-Provider entfällt.
- Inbetriebnahme vollkommen ohne Personal Computer.
- Kein fehlerträchtiges Übertragen der Anmeldedaten vom Personal Computer in das Kommunikationsgerät, z.B. einem VoIP-Gerät.
- Globales Adressbuch mit weltweit angemeldeten Kunden /Teilnehmern eines Geräteherstellers
- Kostenlose Kurznachrichten an bzw. zwischen Kunden
- Konzept erweiterbar auf Dienst wie z.B. "Messaging " und Infodienste.
- Erreichbarkeit unter einer weiteren, vom Kunden auswählbaren numerischen Rufnummer

Alle Kommunikationsgeräte eines Herstellers können durch Aufspielen einer SIP-Server-Komponente auf dem bereits verfügbaren SW-Download- und Profile-Server (vgl. die Europäischen Patentanmeldung mit der Anmeldungsnummer 06004745.3 bzw. die korrespondierende PCT-Patentanmeldung mit der Veröffentlichungsnummer WO 2007/101877 A1) und der Vorkonfiguration mit dem korrespondierenden gerätespezifischen SIP-Profile in der Fertigung in den Zustand "Auspacken und sofort kostenlos telefonieren" gebracht werden.

Die vorstehend erwähnte Kennung wird gemäß den Ansprüchen 5 und 20 vorzugsweise aus einem aus Geräteinformationen zufällig gebildeten Datum, einer Geräteidentität, z.B. die IPUI ("**I**nternational **P**ortable **U**ser **I**dentity") bzw. die RFPI ("**R**adio **F**ixed **P**art **I**dentity"), und/oder einer MAC-Adresse erzeugt.

Die MAC-Adresse als Kennung wird dabei insbesondere bei einem WLAN-Gerät als das Kommunikationsgerät verwendet.

Demgegenüber wird die Kennung gemäß den Ansprüchen 8 und 23 bei einem DECT-spezifischen Festteil, insbesondere Basisstation, als das Kommunikationsgerät aus der "**R**adio **F**ixed **P**art **I**dentity; RFPI" als die Geräteidentität und bei einem DECT-spezifischen Mobilteil als das Kommunikationsgerät aus der "**I**nternational **P**ortable **U**ser **I**dentity; IPUI" als die Geräteidentität gebildet. Gerade die Verwendung der "IPUI" bietet die Möglichkeit, dass ein bestimmtes Mobilteil im Hause auch von außerhalb gezielt angerufen werden kann [-> "virtueller Interncall", **M**ultiple **S**ubscriber **N**umber (MSN), etc.].

Alternativ gemäß den Ansprüchen 9 und 24 ist es auch möglich, dass die Kennung aus einer Seriennummer des Kommunikationsgerätes als die Geräteinformation gebildet wird.

Eine aufwändige vorherige Registrierung der persönlichen Daten durch den Benutzer des Kommunikationsgerätes ist also nicht mehr erforderlich, sondern die erforderlichen Daten werden direkt durch das Gerät selbst bereitgestellt.

Als Erweiterung des Anmeldenamens gemäß den Ansprüchen 4, 6, 7, 19, 21 und 22 kann zu der Kennung vom Benutzer des Gerätes noch ein Spitzname ("Nickname") vergeben und/oder zumindest eine zusätzliche numerische Rufnummer verwendet werden, von denen eine erste Rufnummer bei der Vorkonfiguration des Kommunikationsgerätes vom Gerätehersteller vergeben wird und im Gerät hinterlegt wird, z.B. in einem EEPROM des Gerätes.

Mit dem "Nickname" (angezeigter Name des SIP-Benutzers) kann der Benutzer einen Namen aussuchen, mit dem er in der Datenbank des Servers erscheinen möchte. Zusätzlich besteht die Möglichkeit in Form eines "Alias" auch eine klassische Festnetznummer als zweite numerische Rufnummer zu hinterlegen.

Der Benutzer des Kommunikationsgerätes kann nun jeden in der Datenbank aufgeführten Teilnehmer kostenlos über das paketvermittelte Kommunikationsnetz anrufen.

Der Server führt dazu eine Liste (Tabelle) mit Anmeldenamen, in der alle angemeldeten Kommunikationsgeräte z.B. mit ihren Kennungen, den IP-Adressen, unter denen die Gerät derzeit gerade erreichbar sind, den "Nicknamen" und/oder den Rufnummer hinterlegt sind.

Darüber hinaus ist es möglich, dass gemäß den Ansprüchen 10 und 25 eine zusätzliche SIP-Authentisierung durchgeführt wird, um Fremdprodukte oder PC-Systeme von der Anmeldung am Server auszuschließen und nur berechtigte Kommunikationsgeräte für die Registrierung beim Konfigurationsserver zuzulassen. Der Server schickt eine Zufallszahl und erwartet dazu eine Antwort, die nur die betroffenen Kommunikationsgeräte geben können. Die Eingabe eines Passworts durch den Benutzer ist dabei nicht erforderlich.

Diese kann z.B. gemäß den Ansprüchen 11 und 26 dadurch erfolgen, dass der Konfigurationsserver zur Berechnung von Authentisierungsinformationen im Konfigurationsserver und Kommunikationsgerät, die jeweils durch Verknüpfung einer mehrstelligen Zufallszahl mit einem sowohl in dem Konfigurationsserver (als auch in dem Kommunikationsgerät hinterlegten Passwort ermittelt werden, die mehrstellige Zufallszahl an das Kommunikationsgerät überträgt und das Kommunikationsgerät seine ermittelte Authentisierungsinformation an den Konfigurationsserver sendet. Die Zufallszahl wir dabei vorzugsweise von dem Server generiert.

Möchte der Benutzer einen anderen Gerätebenutzer anrufen, so gibt er gemäß den Ansprüchen 12 und 27 dessen "Nickname" ein und drückt anschließend z.B. eine Verbindungsaufbautaste, z.B. eine INTERN-Taste am Kommunikationsgerät. Der Verbindungsaufbau zum fernen Teilnehmer/der Ruf des fernen Teilnehmers kann aber auch sprachgesteuert erfolgen. Das Kommunikationsgerät sucht nun auf dem Server nach der aktuellen IP-Adresse zum angegeben "Nicknamen". Anschließend wird die rufgesteuerte Verbindung zwischen den beiden Kommunikationsgeräten aufgebaut.

Da nun eine eineindeutige Zuordnung zwischen einer Kennung und IP-Adresse des Gerätes besteht, können natürlich auch weitere Dienste neben Sprache, wie z.B. SMS, MMS, Messaging, Email etc. kostenlos abgewickelt werden.

Ein weiterer Vorteil ist, dass davon ausgegangen werden kann, dass das Kommunikationsgerät im Gegensatz zu einem Personal Computer oder einem Mobiltelefon den ganzen Tag online ist ("always on"). Nachrichten brauchen daher nicht auf einem Server zwischengespeichert zu werden, sondern können direkt zugestellt werden.

Weitere vorteilhafte Weiterbildungen der Erfindung ergeben sich aus den übrigen Unteransprüchen sowie der nachfolgenden Beschreibung eines Ausführungsbeispieles der Erfindung.

Das Ausführungsbeispiel der Erfindung wird anhand der FIGUREN 1 bis 6 erläutert. Es zeigen:
FIGUR 1 ein Kommunikationssystem mit einem Kommunikationsgerät zum Aufbauen und Betreiben einer von einem Kommunikationsserver verwalteten geschlossenen Kommunikationsgemeinschaft im Sinne einer "Plug and Play"-Kommunikation mit dem Server,
FIGUREN 2 bis 6 Prinzipschaubilder darstellend einzelne Phasen einer Prozedur zur Registrierung des Kommunikationsgerätes beim Konfigurationsserver in dem Kommunikationssystem nach der FIGUR 1.

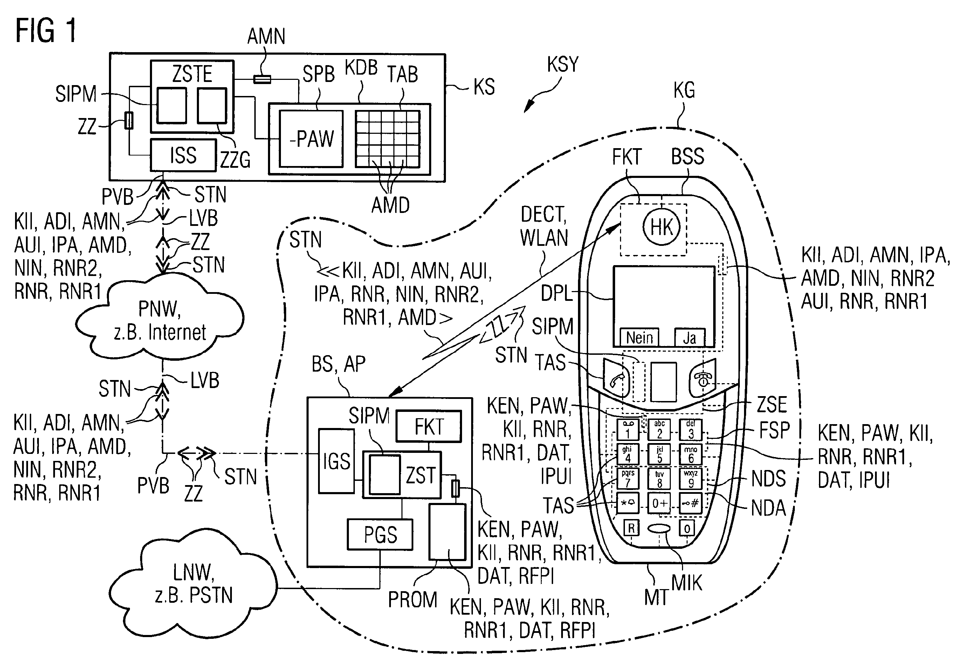

Figur 1 zeigt ein Kommunikationssystem KSY mit einem vorzugsweise entweder als ein Schnurlos-Mobilteil und/oder Schnurlos-Festteil bzw. eine Schnurlos-Basisstation oder als ein WLAN-Mobilteil und/oder einen WLAN-"Access Point" ausgebildeten Kommunikationsgerät KG zum Aufbauen und Betreiben einer von einem vorzugsweise als SIP-Server gemäß dem SIP-Standard http://www.ietf.org/rfc/rfc3261.txt ausgebildeten Kommunikationsserver KS verwalteten, geschlossenen Kommunikationsgemeinschaft im Sinne einer "Plug and Play"-Kommunikation mit dem Konfigurationsserver KS. Der Konfigurationsserver KS ist hierzu vorzugsweise proprietär. Dies bedeutet, dass der Server z.B. dem Hersteller des Kommunikationsgerätes gehört oder von diesem für seine Zwecke genutzt wird, z.B. als Leasing- oder Mietobjekt. Das Kommunikationsgerät KG ist mit dem Konfigurationsserver KS über ein paketvermitteltes Netzwerk PNW, z.B. dem Internet, verbunden. Das Kommunikationsgerät KG umfasst gemäß der FIGUR 1 ein DECT-Telefon (**D**igital **E**nhanced **C**ordless **T**elecommunication) mit einem DECT-Mobilteil MT und einer an das paketvermittelte Netzwerk PNW und an ein leitungsvermitteltes Netzwerk LNW, dem **P**ublic **S**witched **T**elephone **N**etwork (PSTN) angeschlossene DECT-Basisstation BS, die über eine DECT-Luftschnittstelle zur drahtlosen Kommunikation miteinander verbunden sind.

Alternativ zu dieser Ausgestaltung des Kommunikationsgerätes KG ist es auch möglich, dass das Kommunikationsgerät KG aus einem WLAN-Telefon (**W**ireless **L**ocal **A**rea **N**etwork) mit einem WLAN-Mobilteil MT und einem wieder an das paketvermittelte Netzwerk PNW und an das leitungsvermittelte Netzwerk LNW angeschlossenen WLAN-"Access Point" AP aufweist, die über eine WLAN-Luftschnittstelle zur drahtlosen Kommunikation miteinander verbunden sind. Darüber hinaus ist es auch vorstellbar, dass das Kommunikationsgerät KG im Prinzip ein beliebiges Kommunikationsgerät sein kann, so z.B. ein Personal Computer, ein Notebook, ein "Personal Digital Assistant", eine "Set-Top-Box", ein Gateway oder ein Router.

Die an das paketvermittelte Netzwerk PNW und das leitungsvermittelte Netzwerk LNW angeschlossene Basisstation BS bzw. der WLAN-Access Point AP weist für die Realisierung der Luftschnittstelle nach dem DECT-Standard bzw. für die WLAN-Luftschnittstelle ein Funkteil FKT und eine Zentrale Steuerung ZST auf, die miteinander verbunden sind. Der Zentralen Steuerung ZST zugeordnet sind des Weiteren ein vorzugsweise programmierbarer Nur-Lese-Speicher (Programmable Read Only Memory) PROM zur Speicherung von unveränderbaren Daten und "Session Initiation Protocol"-Mittel SIPM, mit denen gemäß dem vorstehend erwähnten SIP-Standard ein SIP-Protokoll ausgeführt werden kann. Für die Verbindung zum paketvermittelten Netzwerk PNW ist des Weiteren eine Internet-/Gerät-Schnittstelle IGS vorgesehen, die ebenfalls mit der Zentralen Steuerung ZST verbunden ist. Darüber hinaus ist für die Verbindung zu dem leitungsvermittelten Netzwerk LNW in der Basisstation BS eine mit der Zentralen Steuerung ZST ebenfalls verbundene PST-/Gerät-Schnittstelle PGS enthalten.

Damit das Mobilteil MT gemäß dem DECT-Standard drahtlos mit der Basisstation BS bzw. gemäß dem WLAN-Standard drahtlos mit dem WLAN-"Access Point" AP kommunizieren kann, weist das Mobilteil MT ebenfalls ein Funkteil FKT und eine Zentrale Steuerungseinrichtung ZSE auf, die miteinander verbunden sind. Der Zentrale Steuerungseinrichtung ZSE zugeordnet sind wieder "Session Initiation Protocol"-Mittel SIPM, mit denen gemäß dem vorstehend erwähnten SIP-Standard ein SIP-Protokoll ausgeführt werden kann. Darüber hinaus weist das Mobilteil MT eine Benutzerschnittstelle BSS auf, zu der insbesondere zur Spracheingabe und -ausgabe ein Mikrofon, eine Hörkapsel HK, zur sonstigen Dateneingabe eine Tastatur bzw. ein Tastenfeld mit einer Vielzahl von Tasten TAS und zur Anzeige von eingegebenen Informationen ein Display DPL gehören. Die Benutzerschnittstelle BSS ist in bekannter Weise mit der Zentralen Steuerungseinrichtung ZSE verbunden. Zur Speicherung von unveränderbaren Daten ist der Zentralen Steuerungseinrichtung ZSE des Mobilteils MT ein Festspeicher FSP zugeordnet. Zudem ist der Zentralen Steuerungseinrichtung ZSE des Mobilteils MT ein Nutzdatenspeicher NDS zugeordnet, in dem insbesondere Nutzdaten NDA, so z.B. Telefonbuchdaten, Servicenachrichten, etc., gespeichert werden.

Der Konfigurationsserver KS ist über eine Internet-/Server-Schnittstelle ISS dem paketvermittelten Netzwerk PNW zugeordnet. In dem Konfigurationsserver KS sind neben der Internet-/Server-Schnittstelle ISS eine Konfigurationsdatenbank KDB und eine Zentrale Steuereinheit ZSTE vorhanden, wobei letztere sowohl mit der Internet-/Server-Schnittstelle ISS als auch mit der Konfigurationsdatenbank KDB verbunden ist. Die Konfigurationsdatenbank KDB enthält zudem einen Speicherbereich SPB, der ebenfalls mit der Zentralen Steuereinheit ZSTE verbunden ist und in dem unveränderbare Daten gespeichert sind. Der Zentralen Steuereinheit ZSTE sind wieder "Session Initiation Protocol"-Mittel SIPM, mit denen gemäß dem vorstehend erwähnten SIP-Standard ein SIP-Protokoll ausgeführt werden kann, und ein Zufallszahlengenerator ZZG zugeordnet.

In einem ersten Schritt - zum Aufbauen und Betreiben der von dem Kommunikationsserver KS verwalteten, geschlossenen Kommunikationsgemeinschaft im Sinne der "Plug and Play"-Kommunikation durch das Kommunikationsgerät KG - werden das Kommunikationsgerät KG und der Konfigurationsserver KS im Vorfeld z.B. beim Hersteller des Kommunikationsgerätes KG hinsichtlich für die Registrierung des Kommunikationsgerätes KG bei dem Konfigurationsserver KS erforderlicher Daten vorkonfiguriert. Dies bedeutet, dass sowohl in dem Kommunikationsgerät KG als auch in dem Konfigurationsserver KS ein vorzugsweise mehrstelliges numerisches Passwort PAW hinterlegt wird. Die Hinterlegung erfolgt bei dem Konfigurationsserver KS in den Speicherbereich SPB der Konfigurationsdatenbank KDB und beim Kommunikationsgerät KG in dem Nur-Lese-Speicher PROM der Basisstation BS bzw. des WLAN-"Access Point" AP und/oder in dem Festspeicher FSP des Mobilteils MT. In dem Nur-Lese-Speicher PROM der Basisstation BS bzw. des WLAN-"Access Point" AP und/oder in dem Festspeicher FSP des Mobilteils MT sind darüber hinaus noch eine gerätespezifische eineindeutige Kennung KEN und eine Konfigurationsinitialisierungsinformation KII hinterlegt.

Die Konfigurationsinitialisierungsinformation KII enthält z.B. als Parameter für den Zugriff auf den SIP-Server KS zumindest dessen IP-Adresse und Portnummer.

Die Kennung KEN kann aus einem aus Geräteinformationen zufällig gebildeten Datum DAT, einer Geräteidentität IPUI, RFPI und/oder einer MAC-Adresse (**M**edia **A**ccess **C**ontrol) MACA erzeugt werden, wenngleich die Erzeugung aus einer Seriennummer des Kommunikationsgerätes KG (der Basisstation BS bzw. des WLAN-"Access Point" AP und/oder des Mobilteils MT) als die Geräteinformation bevorzugt wird.

Alternativ ist es aber möglich, dass
(i) im Fall der DECT-spezifischen Basisstation BS als das Kommunikationsgerät KG die Kennung KEN aus der "**R**adio **F**ixed **P**art **I**dentity RFPI" als die Geräteidentität,
(ii) im Fall des DECT-spezifischen Mobilteils MT als das Kommunikationsgerät KG die Kennung KEN aus der "**I**nternational **P**ortable **U**ser **I**dentity IPUI" als die Geräteidentität,
(iii) im Fall des WLAN-spezifischen "Access Point" AP als das Kommunikationsgerät KG die Kennung KEN aus der MAC-Adresse MACA,
(iv) im Fall des WLAN-spezifischen Mobilteils MT als das Kommunikationsgerät KG die Kennung KEN ebenfalls aus der MAC-Adresse MACA erzeugt wird.

Darüber hinaus dient die ebenfalls vorzugsweise mehrstellige numerische Kennung KEN insbesondere dazu, dass ein Anmeldename AMN zumindest aus der Kennung KEN gebildet wird. Der Kennung KEN gestützte Teil des Anmeldnamens AMN ist z.B. eine im Weiteren als erste Rufnummer RNR1 bezeichnete Rufnummer RNR.

Sämtliche vorstehend genannten kennungsbezogenen Daten sind soweit sie das Mobilteil MT betreffen in dem Festspeicher FSP und soweit sie die Basisstation BS bzw. den WLAN-"Access Point" AP betreffen in dem Nur-Lese-Speicher PROM hinterlegt.

In einem zweiten Schritt - zum Aufbauen und Betreiben der von dem Kommunikationsserver KS verwalteten, geschlossenen Kommunikationsgemeinschaft im Sinne der "Plug and Play"-Kommunikation durch das Kommunikationsgerät KG - beginnt das automatische Anmelden des Kommunikationsgerätes KG beim Konfigurationsserver KS im Rahmen einer Registrierungsprozedur damit, dass die Basisstation BS bzw. der WLAN-"Access Point" AP und somit das Mobilteil MT zunächst an das paketvermittelte Netzwerk PNW zur Herstellung einer physikalischen Verbindung PVB zwischen dem Kommunikationsgerät KG und dem Konfigurationsserver KSS angeschlossen wird.

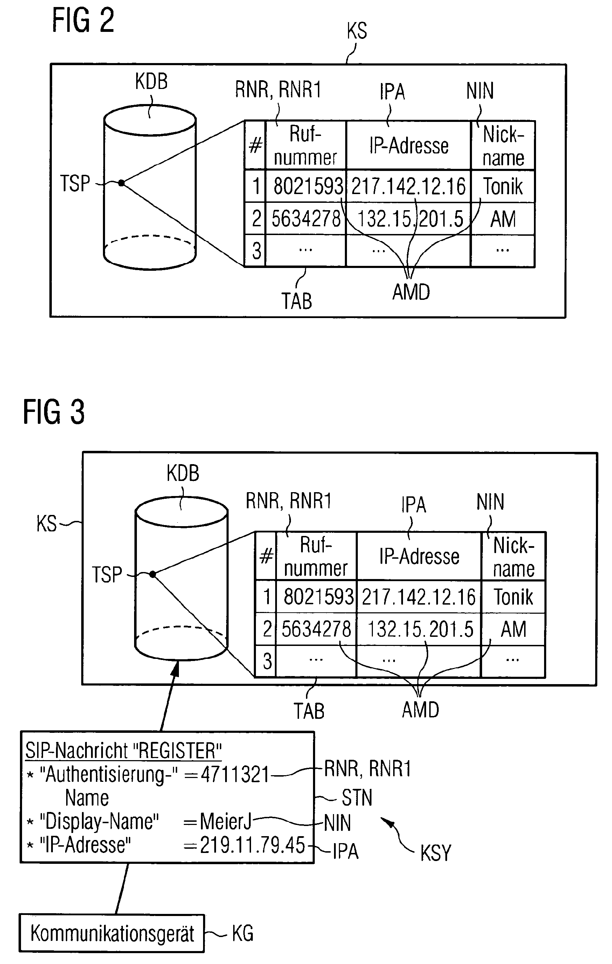

Anschließend werden gemäß der in der Basisstation BS bzw. dem WLAN-"Access Point" AP und/oder dem Mobilteil MT hinterlegten Konfigurationsinitialisierungsinformation KII vorzugsweise als SIP-Nachrichten ausgebildete Steuerungsnachrichten STN zwischen dem Kommunikationsgerät KG und dem Konfigurationsserver KS über eine logische Verbindung LVB übertragen, die gemäß dem SIP-Standard zur SIP-Registrierung http://www,ietf,org/rfc/rfc2617.txt durch eine SIP-Nachricht "REGISTER" und eine SIP-Statusinformation "OK" gebildet werden (vgl. FIGUREN 2 bis 6). Mit den Steuerungsnachrichten STN werden
- die Konfigurationsinitialisierungsinformation KII,
- eine Adressinformation ADI, die eine dem Kommunikationsgerät KG dynamisch zugewiesene IP-Adresse IPA enthält,
- der Anmeldename AMN mit der aus der Kennung KEN gebildeten ersten Rufnummer RNR, RNR1 als Anmeldedatum AMD und optional zusätzlich
- der Anmeldename AMN mit einem "Nicknamen" NIN und/oder mindestens einer zweiten numerischen Rufnummer RNR, RNR2 als Anmeldedaten AMD,
- eine vorzugsweise von dem Zufallszahlengenerator ZZG in der Zentralen Steuereinheit ZSTE des Kommunikationsservers KS generierte Zufallszahl ZZ und
- eine Authentisierungsinformation AUI übertragen.

Sind diese Daten/Informationen übertragen dient der Anmeldename AMN mit den Anmeldedaten AMD nach erfolgter Registrierung für die Kommunikation mit anderen registrierten Kommunikationsteilnehmern als Teilnehmeranschlussinformation, wobei für die Kommunikation mit einem anderen Kommunikationsteilnehmer dessen Anmeldename über die Benutzerschnittstelle BSS des Kommunikationsgerätes KG eingegeben und zum Konfigurationsserver KS übertragen wird. Die Eingabe kann dabei z.B. mittels der Tastatur TAS oder durch Spracheingabe mittels des Mikrofons MIK und der Hörkapsel HK erfolgen. FIGUR 2 zeigt anhand eines Prinzipschaubildes eine erste Phase der Prozedur zur Registrierung des Kommunikationsgerätes KG beim Konfigurationsserver KS in dem Kommunikationssystem KSY nach der FIGUR 1. Gemäß dieser ersten Phase ist der Inhalt der Konfigurationsdatenbank KDB des Konfigurationsservers KS bezüglich darin gespeicherter Anmeldedaten AMD von verschiedenen Kommunikationsteilnehmern der geschlossenen Kommunikationsgemeinschaft vor der Registrierung des Kommunikationsgerätes KG. Die Anmeldedaten AMD sind in einer Tabelle TAB enthalten, die sich auf einen Tabellenspeicherplatz TSP in der Konfigurationsdatenbank KDB befindet. Die Anmeldedaten AMD umfassen im dargestellten Fall für jeden Kommunikationsteilnehmer die erste Rufnummer RNR, RNR1, die IP-Adresse IPA und den Nicknamen NIN.

FIGUR 3 zeigt anhand eines Prinzipschaubildes eine zweite Phase der Prozedur zur Registrierung des Kommunikationsgerätes KG beim Konfigurationsserver KS in dem Kommunikationssystem KSY nach der FIGUR 1. Gemäß dieser zweiten Phase meldet sich das Kommunikationsgerät KG bei dem in den FIGUREN 1 und 2 beschriebenen Konfigurationsserver KS automatisch an. Hierzu überträgt es dem Konfigurationsserver KS gemäß der im Gerät hinterlegten Konfigurationsinitialisierungsinformation KII als Steuerungsnachricht STN die SIP-Nachricht "REGISTER". Mit dieser SIP-Nachricht "REGISTER" werden mit einem SIP-Nachrichtenelement "Authentisierung-Name" die aus der Kennung KEN gebildete erste Rufnummer RNR, RNR1, mit einem SIP-Nachrichtenelement "Display-Name" der Nickname NIN als optionaler Bestandteil des Anmeldenamens AMN und mit einem SIP-Nachrichtenelement "IP-Adresse" die in der Konfigurationsinitialisierungsinformation KII enthaltene IP-Adresse des Kommunikationsgerätes KG dem Konfigurationsserver KS übermittelt.

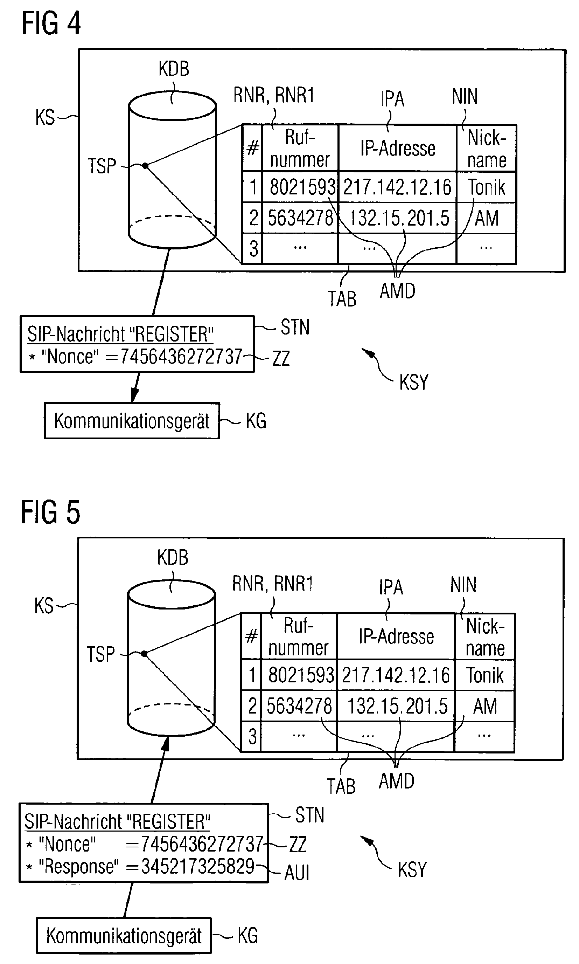

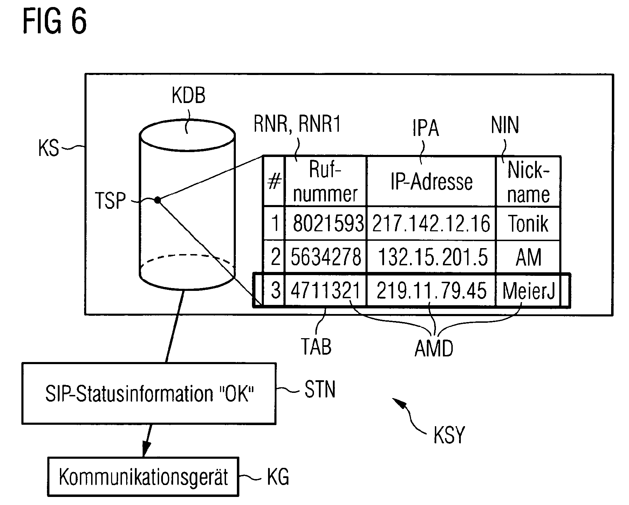

Bevor die von dem Kommunikationsgerät KG übermittelten Informationen entsprechend der Darstellung in der FIGUR 2 durch den Konfigurationsserver KS in die Tabelle TAB der Konfigurationsdatenbank KDB eingetragen und gespeichert werden (vgl. FIGUR 6), wird eine Authentisierung der Anmeldung durchgeführt. Mit dieser Authentisierungsprozedur soll überprüft werden, ob das Kommunikationsgerät berechtigt ist, sich bei dem Konfigurationsserver KS registrieren zu lassen und an der geschlossenen Kommunikationsgemeinschaft teilzunehmen (vgl. FIGUREN 4 und 5).

FIGUREN 4 und 5 zeigen jeweils anhand eines Prinzipschaubildes eine dritte (FIGUR 4) und vierte Phase (FIGUR 5) Phase der Prozedur zur Registrierung des Kommunikationsgerätes KG beim Konfigurationsserver KS in dem Kommunikationssystem KSY nach der FIGUR 1. Gemäß der dritten Phase generiert der in den FIGUREN 1 und 2 beschriebene Konfigurationsserver KS mittels des Zufallszahlengenerators ZZG die vorzugsweise mehrstellige Zufallszahl ZZ und überträgt diese mit einem SIP-Nachrichtenelement "Nonce" der SIP-Nachricht "REGISTER" als Steuerungsnachricht STN an das Kommunikationsgerät KG. Mit dieser generierten und übertragenen Zufallszahl ZZ sind nunmehr sowohl das Kommunikationsgerät KG als auch der Konfigurationsserver KS aufgrund der Tatsache, dass in beiden Einheiten das Passwort PAW bei der Vorkonfiguration hinterlegt worden ist, in der Lage durch Verknüpfung der Zufallszahl ZZ mit dem Passwort PAW die Authentisierungsinformation AUI zu ermitteln.

Sobald das Kommunikationsgerät KG seinerseits die Authentisierungsinformation AUI ermittelt hat überträgt es diese gemäß der vierten Phase in der FIGUR 5 mit einem SIP-Nachrichtenelement "Response" der SIP-Nachricht "REGISTER" als Steuerungsnachricht STN an den Konfigurationsserver KS. Für diese Übertragung wird die Authentisierungsinformation AUI vorzugsweise mit einem aus dem SIP-Standard zur SIP-Registrierung http:/www.ietf.org/rfc/rfc2617.txt bekannten MD5-Algorithmus verknüpft.

Nach Erhalt der übertragenen Authentisierungsinformation AUI vergleicht der Konfigurationsserver KS in der Zentralen Steuereinrichtung ZSTE die übertragene Authentisierungsinformation AUI mit der selbst ermittelten (eigenen) Authentisierungsinformation AUI. Stimmen die beiden Authentisierungsinformationen AUI überein, ist die Registrierung des Kommunikationsgerätes erfolgreich gewesen und die in der zweiten Phase (vgl. FIGUR 3) der Registrierungsprozedur übertragenen Informationen/Anmeldedaten AMD werden in die Tabelle TAB der Konfigurationsdatenbank KDB übernommen (vgl. FIGUR 6). Im anderen Fall, wenn keine Übereinstimmung vorliegt, wird die automatische Anmeldung/Registrierung des Kommunikationsgerätes KG abgewiesen.

FIGUR 6 zeigt anhand eines Prinzipschaubildes eine fünfte und letzte Phase der Prozedur zur Registrierung des Kommunikationsgerätes KG beim Konfigurationsserver KS in dem Kommunikationssystem KSY nach der FIGUR 1. Gemäß dieser fünften Phase sind die Anmeldedaten AMD des Kommunikationsgerätes KG in die Tabelle TAB der Konfigurationsdatenbank KDB übernommen worden. Um dieses dem Kommunikationsgerät KG zu signalisieren, überträgt der Konfigurationsserver KS dem Kommunikationsgerät KG als Steuerungsnachricht STN die SIP-Statusinformation "OK".

Dadurch ist die Registrierung erfolgt und die gespeicherten Anmeldedaten AMD dienen für die Kommunikation mit anderen registrierten Kommunikationsteilnehmern als Teilnehmeranschlussinformation, wobei für die Kommunikation mit einem anderen Kommunikationsteilnehmer beispielsweise dessen Nickname NIN (z.B. ToniK oder AM) oder dessen erste Rufnummer RNR, RNR1 (z.B. 8021593 oder 5634278) über die Benutzerschnittstelle BSS des Kommunikationsgerätes KG eingegeben und zum Konfigurationsserver KS übertragen wird. Die Eingabe kann dabei z.B. mittels der Tastatur TAS oder durch Spracheingabe mittels des Mikrofons MIK und der Hörkapsel HK erfolgen.

## Patentansprüche

1. Verfahren zum Aufbauen und Betreiben eines Kommunikationssystems, bei dem ein Kommunikationsgerät (KG) mit einem proprietären Konfigurationsserver (KS) zur Bildung einer geschlossenen Kommunikationsgemeinschaft in einem paketvermittelten Kommunikationsnetz (KSY) verbunden wird, wobei
a) das Kommunikationsgerät (KG) und der Konfigurationsserver (KS) hinsichtlich für die Registrierung des Kommunikationsgerätes (KG) bei dem Konfigurationsserver (KS) erforderlicher Daten vorkonfiguriert wird,
b) mit der Vorkonfiguration des Kommunikationsgerätes (KG) im Kommunikationsgerät (KG) eine Konfigurationsinitialisierungsinformation (KII) hinterlegt wird, gemäß der sich das Kommunikationsgerät (KG) im Rahmen einer Registrierungsprozedur mit einer eine Adressinformation (ADI) enthaltenen Steuerungsnachricht (STN) beim Konfigurationsserver (KS) automatisch anmeldet,
c) für die Anmeldung ein Anmeldename (AMN) der Steuerungsnachricht (STN) zumindest aus einer gerätespezifischen eineindeutigen Kennung (KEN) gebildet wird, der nach erfolgter Registrierung für die Kommunikation mit anderen registrierten Kommunikationsteilnehmern als Teilnehmeranschlussinformation dient,
d) für die Kommunikation mit einem anderen Kommunikationsteilnehmer dessen Anmeldename (AMN) am Kommunikationsgerät (KG) eingegeben und zum Konfigurationsserver (KS) übertragen wird wobei,
bei der Anmeldung des Kommunikationsgerätes (KG) im Rahmen der Registrierungsprozedur für die Registrierung beim Konfigurationsserver (KS) eine Authentisierung durchgeführt wird, **dadurch gekennzeichnet, dass** für die Authentisierung der Konfigurationsserver (KS) zur Berechnung von Authentisierungsinformationen (AUI) im Konfigurationsserver (KS) und Kommunikationsgerät (KG), die jeweils durch Verknüpfung einer mehrstelligen Zufallszahl (ZZ) mit einem sowohl in dem Konfigurationsserver (KS) als auch in dem Kommunikationsgerät (KG) hinterlegten Passwort (PAW) ermittelt werden, die mehrstellige Zufallszahl (ZZ) an das Kommunikationsgerät (KG) überträgt und das Kommunikationsgerät (KG) seine ermittelte Authentisierungsinformation (AUI) an den Konfigurationsserver (KS) sendet.

2. Verfahren nach Anspruch 1, **dadurch gekennzeichnet, dass** eine dem Kommunikationsgerät (KG) dynamisch zugewiesene IP-Adresse (IPA) als die Adressinformation (ADI) benutzt wird.

3. Verfahren nach Anspruch 1, **dadurch gekennzeichnet, dass** der Anmeldename (AMN) zusätzlich zu einer aus der Kennung (KEN) gebildeten ersten Rufnummer (RNR, RNR1) aus einem "Nicknamen" (NIN) und/oder aus mindestens einer zweiten numerischen Rufnummer (RNR, RNR2) gebildet wird, wobei die erste numerische Rufnummer (RNR1) bei der Vorkonfiguration vergeben wird und die zweite numerische Rufnummer (RNR2) sowie der "Nickname" (NIN) durch den Benutzer eingegeben wird, unter die dieser dann erreichbar sein wird.

4. Verfahren nach Anspruch 3, **dadurch gekennzeichnet, dass** eine Festnetznummer als die zweite numerische Rufnummer (RNR2) benutzt wird.

5. Verfahren nach Anspruch 1, **dadurch gekennzeichnet, dass** die Kennung (KEN) aus einem aus Geräteinformationen zufällig gebildeten Datum (DAT), einer Geräteidentität (IPUI, RFPI) und/oder einer MAC-Adresse (MACA) erzeugt wird.

6. Verfahren nach Anspruch 4, **dadurch gekennzeichnet, dass** die Kennung (KEN) bei einem DECT-spezifischen Festteil, insbesondere Basisstation, als das Kommunikationsgerät (KG) aus einer "Radio Fixed Part Identity (RFPI)" als die Geräteidentität oder bei einem DECT-spezifischen Mobilteil als das Kommunikationsgerät (KG) eine "**I**nternational Portable User Identity (IPUI)" als die Geräteidentität erzeugt wird.

7. Verfahren nach Anspruch 5, **dadurch gekennzeichnet, dass** die Kennung (KEN) aus einer Seriennummer des Kommunikationsgerätes (KG) als die Geräteinformation erzeugt wird.

8. Kommumkationsgerät (KG) zum Aufbauen und Betreiben eines Kommunikationssystems, bei dem das Kommunikationsgerät (KG) mit einem proprietären Konfigurationsserver (KS) zur Bildung einer geschlossenen Kommunikationsgemeinschaft in einem paketvermittelten Kommunikationsnetz (KSY) verbunden ist, der hinsichtlich für die Registrierung des Kommunikationsgerätes (KG) beim Konfigurationsserver (KS) erforderlicher Daten vorkonfiguriert ist, **dadurch gekennzeichnet, dass** Zentrale Steuerungsmittel (ZSE, ZST), Speichermittel (FSP, PROM), Sende-/Empfangsmittel (FKT, IGS) und eine Benutzerschnittstelle (BSS, MIK, TAS, HK, DPL) vorhanden sind, die derart ausgebildet und miteinander verbunden sind, wobei
a) das Kommunikationsgerät (KG) hinsichtlich für die Registrierung des Kommunikationsgerätes (KG) bei dem Konfigurationsserver (KS) erforderlicher Daten vorkonfiguriert ist,
b) mit der Vorkonfiguration des Kommunikationsgerätes (KG) im Kommunikationsgerät (KG) eine Konfigurationsinitialisierungsinformation (KII) hinterlegt ist, gemäß der sich das Kommunikationsgerät (KG) im Rahmen einer Registrierungsprozedur mit einer eine Adressinformation (ADI) enthaltenen Steuerungsnachricht (STN) beim Konfigurationsserver (KS) automatisch anmeldet,
c) für die Anmeldung ein Anmeldename (AMN) der Steuerungsnachricht (STN) zumindest aus einer gerätespezifischen eineindeutigen Kennung (KEN) bildbar ist, der nach erfolgter Registrierung für die Kommunikation mit anderen registrierten Kommunikationsteilnehmern als Teilnehmeranschlussinformation dient,
d) für die Kommunikation mit einem anderen Kommunikationsteilnehmer dessen Anmeldename (AMN) am Kommunikationsgerät (KG) eingebbar und zum Konfigurationsserver (KS) übertragbar ist, wobei
die Zentralen Steuerungsmittel (ZSE, ZST), die Speichermittel (FSP, PROM) und die Sende-/Empfangsmittel (FKT, IGS) derart ausgebildet sind, dass bei der automatischen Anmeldung des Kommunikationsgerätes (KG) im Rahmen der Registrierungsprozedur für die Registrierung beim Konfigurationsserver (KS) eine Authentisierung durchführbar ist, **dadurch gekennzeichnet,**
**dass** die Zentralen Steuerungsmittel (ZSE, ZST), die Speichermittel (FSP, PROM) und die Sende-/Empfangsmittel (FKT, IGS) derart ausgebildet sind, dass für die Authentisierung zur Berechnung einer Authentisierungsinformation (AUI), die durch Verknüpfung einer mehrstelligen Zufallszahl (ZZ) mit einem in den Speichermitteln (FSPO, ROM) hinterlegten Passwort (PAW) ermittelbar ist, über die Sende-/Empfangsmittel (FKT, IGS) die mehrstellige Zufallszahl (ZZ) von dem Konfigurationsserver (KS) empfangbar und die ermittelte Authentisierungsinformation (AUI) an den Konfigurationsserver (KS) sendbar ist.

9. Kommunikationsgerät (KG) nach Anspruch 8, **dadurch gekennzeichnet, dass** den Zentralen Steuerungsmitteln (ZSE, ZST) "Session Initiation Protocol"-Mittel (SIPM) zugeordnet sind, die derart ausgebildet sind, das eine "Session Initiation Protocol (SIP)"-Nachricht und eine "Session Initiation Protocol (SIP)"-Statusinformation als die Steuerungsnachricht (STN) nutzbar ist.

10. Kommunikationsgerät (KG) nach Anspruch 8, **dadurch gekennzeichnet, dass** die Zentralen Steuerungsmittel (ZSE, ZST), die Speichermittel (FSP, PROM) und die Benutzerschnittstelle (BSS, MIK, TAS, HK,DPL) derart ausgebildet sind, dass der Anmeldename (AMN) zusätzlich zu einer aus der Kennung (KEN) gebildeten ersten Ruf nummer (RNR, RNR1) aus einem "Nicknamen" (NIN) und/oder aus mindestens einer zweiten numerischen Rufnummer (RNR,RNR2) bildbar ist, und dass die Zentralen Steuerungsmittel (ZSE, ZST), die Speichermittel (FSP, PROM), die Sende-/Empfangsmittel (FKT, IGS) und die Benutzerschnittstelle (BSS, MIK, TAS, HK, DPL) derart ausgebildet sind, dass die erste numerische Rufnummer (RNR1) bei der Vorkonfiguration vergebbar ist und die zweite numerische Rufnummer (RNR2) sowie der "Nickname" (NIN) durch den Benutzer eingebbar ist, unter die dieser dann erreichbar ist.

11. Kommunikationsgerät (KG) nach Anspruch 8, **dadurch gekennzeichnet, dass** die Zentralen Steuerungsmittel (ZSE, ZST) und die Speichermittel (FSP, PROM) derart ausgebildet sind, dass die Kennung (KEN) aus einem aus Geräteinformationen zufällig gebildeten Datum (DAT), einer Geräteidentität (IPUI, RFPI) und/oder einer MAC-Adresse (MACA) erzeugt wird.

12. Kommunikationsgerät (KG) nach Anspruch 10, **dadurch gekennzeichnet, dass** die Zentralen Steuerungsmittel (ZSE, ZST), die Speichermittel (FSP, PROM) und die Sende-/Empfangsmittel (FKT, IGS) derart ausgebildet sind, dass eine Festnetznummer als die zweite numerische Rufnummer (RNR2) nutzbar ist.

13. Kommunikationsgerät (KG) nach Anspruch 11, **dadurch gekennzeichnet, dass** die Zentralen Steuerungsmittel (ZSE, ZST) und die Speichermittel (FSP, PROM) derart ausgebildet sind, dass die Kennung (KEN) bei einem DECT-spezifischen Festteil, insbesondere Basisstation, als das Kommunikationsgerät (KG) aus einer "Radio Fixed Part Identity (RFPI)" als die Geräteidentität, oder bei einem DECT-spezifischen Mobilteil als das Kommunikationsgerät (KG) eine "International Portable User Identity (IPUI)" als die Geräteidentität, erzeugbar ist.

14. Kommunikationsgerät (KG) nach Anspruch 11, **dadurch gekennzeichnet, dass** die Zentralen Steuerungsmittel (ZSE, ZST) und die Speichermittel (FSP, PROM) derart ausgebildet sind, dass die Kennung (KEN) aus einer Seriennummer des Kommunikationsgerätes (KG) als die Geräteinformation erzeugbar ist.

## Claims

1. Method for setting up and operating a communication system in which a communication device (KG) is connected to a proprietary configuration server (KS) within a packet-switched communication network (KSY) for forming a closed communication community, wherein
a) the communication device (KG) and the configuration server (KS) are preconfigured with respect to data required for the registration of the communication device (KG) at the configuration server (KS);
b) during the preconfiguration of the communication device (KG) configuration initialization information (KII) is stored in the communication device (KG) according to which the communication device (KG) in the course of a registration procedure logs in automatically at the configuration server (KS) by use of a control message (STN) which includes an address information (ADI);
c) for the login a login name (AMN) of the control message (STN) is generated at least from a device specific biunique identifier (KEN), wherein the login name after successful registration serves as subscriber information for the communication with other registered communication participants;
d) for the communication with another communication participant his login name (AMN) is entered at the communication device (KG) and transmitted to the communication server (KS), wherein
during login of the communication device (KG) in the course of the registration procedure for the registration at the configuration server (KS) an authentication is carried out;
**characterized in that**
for the authentication the configuration server (KS) for calculating authentication information (AUI) in the configuration server (KS) and in the communication device (KG), which each are determined by linking a multi-digit random number (ZZ) with a password (PAW) stored both in the configuration server (KS) and in the communication device, transmits the multi-digit random number (ZZ) to the communication device (KG) and the communication device (KG) transmits its determined authentication information (AUI) to the configuration server (KS).

2. Method according to claim 1, **characterized in that** an IP address (IPA) dynamically assigned to the communication device (KG) is used as the address information (ADI).

3. Method according to claim 1, **characterized in that** the login name (AMN) in addition to a first call number (RNR, RNRL) generated from the identifier (KEN) is generated from a "nickname" (NIN) and/or at least a second numerical call number (RNR, RNR2), wherein the first numerical call number (RNR1 ) is assigned at the preconfiguration and the second numerical call number (RNR2) and the "nickname" (NN) are entered by the user, under which the user subsequently can be contacted.

4. Method according to claim 3, **characterized in that** a fixed line number is used as the second numerical call number (RNR2).

5. Method according to claim 1, **characterized in that** the identifier (KEN) is generated from a data element (DAT) generated randomly from device information (DAT), a device identity (IPUI, RFPI) and/or a MAC address (MACA).

6. Method according to claim 4, **characterized in that** the identifier (KEN) is generated in a DECT specific fixed part, in particular a base station, as the communication device (KG) from a "Radio Fixed Part Identity (RFPI)" as the device identity or in a DECT specific mobile part as the communication device (KG) an "International Portable User Identity (IPUI)" is generated as the device identity.

7. Method according to claim 5, **characterized in that** the identifier (KEN) is generated from a serial number of the communication device (KG) as the device information.

8. Communication device (KG) for setting up and operating a communication system, wherein the communication device (KG) is connected to a proprietary configuration server (KS) for forming a closed communication community in a packet-switched communication network (KSY), which is pre-configured with respect to data required for the registration of the communication device (KG) at the configuration server (KS),
**characterized in that**
central control means (ZSE, ZST), storage means (FSP, PROM), transmission/reception means (FKT, IGS) and a user interface (BSS, MIK, TAS, HK, DPL) are provided, which are configured and connected to each other such that
a) the communication device (KG) is preconfigured with respect to data required for the registration of the communication device (KG) at the configuration server (KS);
b) with the preconfiguration of the communication device (KG) configuration initialization information (KII) is stored in the communication device (KG) according to which the communication device (KG) in the course of a registration procedure automatically logs in at the configuration server (KS) with a control message (STN) which includes an address information (ADI);
c) for the login a login name (AMN) of the control message (STN) can be generated at least from a device specific biunique identifier (KEN), wherein the login name after successful registration is used as subscriber information for the communication with other registered communication participants;
d) for the communication with another communication participant his login name (AMN) can be entered at the communication device (KG) and can be transferred to the configuration server (KS),
wherein the central control means (ZSE, ZST), the storage means (FSO, PROM) and the transmission/reception means (FKT, IGS) are configured such that during an automatic login of the communication device (KG) in the course of the registration procedure for the registration at the communication server (KS) an authentication has to be carried out;
**characterized in that**
the central control means (ZSE, ZST), the storage means (FSP, PROM) and the transmission/reception means (FKT, IGS) are configured such that for the authentication for calculating an authentication information (AUI), which can be determined by linking a multi-digit random number (ZZ) with a password (PAW) stored in the storage means (FSPO, ROM), the multi-digit random number (ZZ) can be received from the configuration server (KS) via the transmission/reception means (FKT, IGS) and the determined authentication information (AUI) can be sent to the configuration server (KS).

9. Communication device (KG) according to claim 8, **characterized in that** "Session Initiation Protocol" means (SIPM) are associated to the central control means (ZSE, ZST), which are configured such that a "Session Initiation Protocol (SIP)" message and a "Session Initiation Protocol (SIP)" status information can be used as the control message (STN).

10. Communication device (KG) according to claim 8, **characterized in that** the central control means (ZSE, ZST), the storage means (FSP, PROM) and the user interface (BSS, MIK, TAS, HK, DPL) are configured such that the login name (AMN) in addition to a first call number (RNR, RNRL) generated from the identifier (KEN) can be generated from a "nickname" (NIN) and/or from at least a second numerical call number (RNR, RNR2), and that the central control means (ZSE), the storage means (FSP, PROM), the transmission/reception means (FKT, IGS) and the user interface (BSS, MIK, TAS, HK, DPL) are configured such that the first numerical call number (RNR1) can be assigned in the course of the preconfiguration and the second numerical call number (RNR2) and the "nickname" (NIN) can be entered by the user, under which the user subsequently can be contacted.

11. Communication device (KG) according to claim 8, **characterized in that** the central control means (ZSE, ZST) and the storage means (FSP, PROM) are configured such that the identifier (KEN) is generated from a data element (DAT) randomly generated from device information, a device identity (IPUI, RFPI) and/or a MAC address (MACA).

12. Communication device (KG) according to claim 10, **characterized in that** the central control means (ZSE, ZST), the storage means (FSP, PROM) and the transmission/reception means (FKT IGT) are configured such that a fixed line number can be used as the second numerical call number (RNR2).

13. Communication device (KG) according to claim 11, **characterized in that** the central control means (ZSE, ZST) and the storage means (FSP, PROM) are configured such that the identifier (KEN) in a DECT specific fixed part, in particular a base station, as the communication device (KG) can be generated from a "Radio Fixed Part Identity (RFPI)" as the device identity or in a DECT specific mobile part as the communication device (KG) an "International Portable User Identity (IPUI)" can be generated as the device identity.

14. Communication device (KG) according to claim 11, **characterized in that** the central control means (ZSE, ZST) and the storage medium (FSP, PROM) are configured such that the identifier (KEN) can be generated from a serial number of the communication device (KG) as the device information.

## Revendications

1. Procédé pour l'établissement et l'exploitation d'un système de communications, dans lequel un appareil de communication (KG) est relié avec un serveur de configuration propriétaire (KS) pour la formation d'une communauté de communication fermée dans un réseau de communication prêt à l'emploi (KSY), où
a) l'appareil de communication (KG) et le serveur de configuration (KS) sont préalablement configurés en ce qui concerne les données nécessaires pour l'enregistrement de l'appareil de communication (KG) auprès du serveur de configuration (KS),
b) avec la configuration préalable de l'appareil de communication (KG) dans l'appareil de communication (KG), une information d'initialisation de configuration (KII) est déposée, en fonction de laquelle l'appareil de communication (KG) s'enregistre automatiquement auprès du serveur de configuration (KS) dans le cadre d'une procédure d'enregistrement avec une information de commande (STN) contenue dans une information d'adresse (ADI),
c) pour l'enregistrement, un nom d'enregistrement (AMN) de l'information de commande (STN) est formé au moins à partir d'un identifiant indiscutable spécifique à l'appareil (KEN), qui sert pour la communication avec d'autres participants à la communication enregistrés après un enregistrement couronné de succès,
d) pour la communication avec un autre participant à la communication dont le nom d'enregistrement (AMN) est enregistré dans l'appareil de communication (KG) et est transmis vers le serveur de configuration (KS), où
lors de l'enregistrement de l'appareil de communication (KG) dans le cadre de la procédure d'enregistrement, une authentification est réalisée pour l'enregistrement chez le serveur de configuration (KS), **caractérisé en ce que**, pour l'authentification du serveur de configuration (KS), pour le calcul des informations d'authentification (AUI) dans le serveur de configuration (KS) et l'appareil de communication (KG), qui peuvent être recherchés chacun par un recoupement d'un nombre aléatoire à plusieurs chiffres (ZZ) avec un mot de passe (PAW) déposé à la fois dans le serveur de configuration (KS) et dans l'appareil de communication (KG), le nombre aléatoire à plusieurs chiffres (ZZ) est transmis à l'appareil de communication (KG) et l'appareil de communication (KG) envoie son information d'authentification (AUI) trouvée au serveur de configuration (KS).

2. Procédé selon la revendication 1, **caractérisé en ce qu'**une adresse IP (IPA) allouée de manière dynamique à l'appareil de communication (KG) est utilisée en tant qu'adresse d'information (ADI).

3. Procédé selon la revendication 1, **caractérisé en ce que** le nom d'enregistrement (AMN) est formé complémentairement à un premier numéro d'appel (RNNR, RNR1) formé par l'identifiant (KEN) à partir d'un « surnom » (NIN) et/ou à partir d'au moins un deuxième numéro d'appel numérique (RNR, RNR2), où le premier numéro d'appel numérique (RNR1) est attribué lors de la configuration préalable et le deuxième numéro d'appel numérique (RNR2) ainsi que le « surnom » sont indiqués par l'utilisateur, par lesquels celui-ci est alors joignable.

4. Procédé selon la revendication 3, **caractérisé en ce qu'**un numéro de ligne fixe est utilisé en tant que deuxième numéro d'appel numérique (RNR2).

5. Procédé selon la revendication 1, **caractérisé en ce que** l'identifiant (KEN) est généré à partir d'une date formée de manière aléatoire (DAT), un identifiant d'appareil (IPUI, RFPI) et/ou d'une adresse MAC (MACA) parmi des informations relatives à l'appareil.

6. Procédé selon la revendication 4, **caractérisé en ce que** l'identifiant (KEN) est généré pour une partie fixe spécifique DECT, notamment une station de base, en tant qu'appareil de communication (KG) à partir d'une identité « Radio Fixed Part Identity (RFPI) » en tant qu'identifiant d'appareil ou pour une partie mobile spécifique DECT en tant qu'appareil de communication (KG), une identité « International Portable User Identity (IPUI) » en tant qu'identifiant d'appareil.

7. Procédé selon la revendication 5, **caractérisé en ce que** l'identifiant (KEN) est généré à partir d'un numéro de série de l'appareil de communication (KG) en tant qu'information relative à l'appareil.

8. Appareil de communication (KG) pour l'établissement et l'exploitation d'un système de communications, dans lequel l'appareil de communication (KG) est relié avec un serveur de configuration prioritaire (KS) pour la formation d'une communauté de communication fermée dans un réseau de communication (KSY) prêt à l'emploi, qui est configuré préalablement en ce qui concerne les données nécessaires pour l'enregistrement de l'appareil de communication (KG) auprès du serveur de configuration (KS), **caractérisé en ce que** des moyens de commande centralisés (ZSE, ZST), des moyens de mémoire (FSP, PROM), des moyens émetteurs / récepteurs (FKT IGS) et une interface utilisateur (BSS, MIK, TAS, HK, DPL) sont présents, qui sont conçus de telle manière et reliés ensemble, où
a) l'appareil de communication (KG) est préalablement configuré en ce qui concerne l'enregistrement de données nécessaires de l'appareil de communication (KG) auprès du serveur de configuration (KS),
b) une information d'initialisation de configuration (KII) est déposée avec la configuration préalable de l'appareil de communication (KG) dans l'appareil de communication (KG), selon laquelle l'appareil de communication (KG) s'enregistre automatiquement auprès du serveur de configuration (KS) dans le cadre d'une procédure d'enregistrement avec une information de commande (STN) contenue dans une adresse d'information (ADI),
c) pour l'enregistrement, un nom d'enregistrement (AMN) de l'information de commande (STN) peut être formé au moins à partir d'un identifiant indiscutable spécifique à l'appareil (KEN), qui sert pour la communication avec d'autres participants à la communication enregistrés après un enregistrement couronné de succès,
d) pour la communication avec un autre participant à la communication dont le nom d'enregistrement (AMN) peut être enregistré dans l'appareil de communication (KG) et être transmis vers le serveur de configuration (KS), où les moyens de commande centralisés (ZSE, ZST), les moyens de mémoire (FSP, PROM) et les moyens émetteurs / récepteurs (FKT, IGS) sont conçus de telle manière que, lors de l'enregistrement automatique de l'appareil de communication (KG) dans le cadre du protocole d'enregistrement pour l'enregistrement auprès du serveur de configuration (KS), une authentification peut être réalisée, **caractérisé en ce que**, les moyens de commande centralisés (ZSE, ZST), les moyens de mémoire (FSP, PROM) et les moyens émetteurs / récepteurs (FKT, IGS) sont conçus de telle manière que, pour l'authentification pour le calcul d'une information d'authentification (AUI), qui peut être acquise par le recoupement d'un nombre aléatoire à plusieurs chiffres (ZZ) avec un mot de passe (PAW) déposé dans l'un des moyens de mémoire (FSPO, ROM), par les moyens émetteurs / récepteurs (FKT, IGS) le nombre aléatoire à plusieurs chiffres (ZZ) peut être reçu à partir du serveur de configuration (KS) et l'information d'authentification (AUI) évaluée peut être envoyée au serveur de configuration (KS).

9. Appareil de communication (KG) selon la revendication 8, **caractérisé en ce que** des moyens de « Protocole d'Initiation de Session » (SIPM) sont associés aux moyens de commande centralisés (ZSE, ZST), qui sont conçus de façon qu'une information de « Protocole d'Initiation de Session (SIP) » et une information d'état de « Protocole d'Initiation de Session (SIP) » sont utilisables en tant qu'information de commande (STN).

10. Appareil de communication (KG) selon la revendication 8, **caractérisé en ce que** les moyens de commande centralisés (ZSE, ZST), les moyens de mémoire (FSP, PROM) et l'interface d'utilisateur (BSS, MIK, TAS, HK, DPL) sont conçus de sorte que le nom d'enregistrement (AMN) peut être formé également, en plus d'un premier numéro d'appel (RNR, RNR1) formé à partir de l'identifiant (KEN), d'un « surnom » (NIN) et/ou à partir d'au moins un deuxième numéro d'appel numérique (RNR, RNR2), et que les moyens de commande centralisés (ZSE, ZST), les moyens de mémoire (FSP, PROM), les moyens émetteurs / récepteurs (FKT, IGS) et l'interface d'utilisateur (BSS, MIK, TAS, HK, DPL) sont conçus de telle manière que le premier numéro d'appel numérique (RNR1) peut être attribué avant la configuration préalable et le deuxième numéro d'appel numérique (RNR2) ainsi que le « surnom » (NIN) peuvent être indiqués par l'utilisateur, par lesquels celui-ci peut alors être joint.

11. Appareil de communication (KG) selon la revendication 8, **caractérisé en ce que** les moyens de commande centralisés (ZSE, ZST) et les moyens de mémoire (FSP, PROM) sont conçus de telle manière que l'identifiant (KEN) est généré à partir d'une date formée de manière aléatoire (DAT), d'une identité de l'appareil (IPUI, RFPI) et/ou d'une adresse MAC (MACA) concernant des informations relatives à l'appareil,.

12. Appareil de communication (KG) selon la revendication 10, **caractérisé en ce que** les moyens de commande centralisés (ZSE, ZST), les moyens de mémoire (FSP, PROM) et les moyens émetteurs / récepteurs (FKT, IGS) sont conçus de telle manière qu'un numéro de réseau fixe peut être utilisé en tant que deuxième numéro d'appel numérique (RNR2).

13. Appareil de communication (KG) selon la revendication 11, **caractérisé en ce que** les moyens de commande centralisés (ZSE, ZST) et les moyens de mémoire (FSP, PROM) sont conçus de telle manière que l'identifiant (KEN) peut être généré auprès d'une partie fixe spécifique de DECT, notamment, une station de base, en tant qu'appareil de communication (KG) à partir d'une « identité de partie fixe radio (RFPI) » en tant qu'identité d'appareil ou auprès d'une partie mobile spécifique de DECT en tant qu'appareil de communication (KG), une « identité d'utilisateur de portable international (IPUI) » peut être générée.

14. Appareil de communication (KG) selon la revendication 11, **caractérisé en ce que** les moyens de commande centralisés (ZSE, ZST) et les moyens de mémoire (FSP, PROM) sont conçus de telle manière que l'identifiant (KEN) peut être généré en tant qu'information relative à l'appareil à partir d'un numéro de série de l'appareil de communications (KG).
